(19) Europäisches Patentamt
European Patent Office
Office européen des brevets

(11) **EP 3 449 555 B1**

(12) **FASCICULE DE BREVET EUROPEEN**

(45) Date de publication et mention
de la délivrance du brevet:
**19.08.2020 Bulletin 2020/34**

(21) Numéro de dépôt: **17721793.2**

(22) Date de dépôt: **19.04.2017**

(51) Int Cl.:
**H02M 3/335** $^{(2006.01)}$

(86) Numéro de dépôt international:
**PCT/FR2017/050924**

(87) Numéro de publication internationale:
**WO 2017/187045 (02.11.2017 Gazette 2017/44)**

(54) **PROCÉDÉ DE COMMANDE D'UN CONVERTISSEUR DC/DC À DOUBLE PONT**

VERFAHREN ZUR STEUERUNG EINES DOPPELBRÜCKEN-DC/DC-UMRICHTERS

METHOD OF CONTROLLING A DUAL-BRIDGE DC/DC CONVERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.04.2016 FR 1653629**

(43) Date de publication de la demande:
**06.03.2019 Bulletin 2019/10**

(73) Titulaire: **Supergrid Institute
69100 Villeurbanne (FR)**

(72) Inventeurs:
• **LAGIER, Thomas
69372 Lyon Cedex 08 (FR)**
• **LADOUX, Philippe
69372 Lyon Cedex 08 (FR)**

(74) Mandataire: **Guérin, Jean-Philippe
Opilex
32 rue Victor Lagrange
69007 Lyon (FR)**

(56) Documents cités:
• **CORRADINI L ET AL: "Minimum Current Operation of Bidirectional Dual-Bridge Series Resonant DC/DC Converters", IEEE TRANSACTIONS ON POWER ELECTRONICS, INSTITUTE OF ELECTRICAL AND ELECTRONICS ENGINEERS, USA, vol. 27, no. 7, 1 juillet 2012 (2012-07-01), pages 3266-3276, XP011454756, ISSN: 0885-8993, DOI: 10.1109/TPEL.2011.2181421**
• **THOMAS LAGIER ET AL: "A comparison of insulated DC-DC converters for HVDC off-shore wind farms", 2015 INTERNATIONAL CONFERENCE ON CLEAN ELECTRICAL POWER (ICCEP), 1 juin 2015 (2015-06-01), pages 33-39, XP055355954, DOI: 10.1109/ICCEP.2015.7177597 ISBN: 978-1-4799-8704-7**
• **ROSS P. TWINAME ET AL: "A Dual-Active Bridge Topology With a Tuned <italic>CLC</italic> Network", IEEE TRANSACTIONS ON POWER ELECTRONICS, vol. 30, no. 12, 1 décembre 2015 (2015-12-01), pages 6543-6550, XP055356650, USA ISSN: 0885-8993, DOI: 10.1109/TPEL.2014.2384511**
• **MALAN W L ET AL: "Modeling and control of a CLC Resonant Dual Active Bridge", 2014 AUSTRALASIAN UNIVERSITIES POWER ENGINEERING CONFERENCE (AUPEC), ACPE, 28 septembre 2014 (2014-09-28), pages 1-6, XP032691760, DOI: 10.1109/AUPEC.2014.6966537**

**Description**

**Domaine technique de l'invention**

La présente invention se rapporte à un procédé de commande d'un convertisseur DC/DC présentant une technologie à double pont. L'invention concerne également un système de commande destiné à la commande du convertisseur DC/DC, un programme d'ordinateur destiné à mettre en œuvre ledit procédé et un support de stockage qui comporte ledit programme d'ordinateur.

**Etat de la technique**

Le convertisseur DC/DC à double pont, dénommé également "Dual Active Bridge", est bien connu et fait l'objet d'un intérêt particulier dans certains domaines, par exemple pour les réseaux électriques, dans la conversion des tensions fournies par des sources d'énergie photovoltaïque ou pour l'automobile, dans le chargement des batteries des véhicules électriques. Le convertisseur DC/DC à double pont est notamment étudié de près car il permet de mettre en œuvre des techniques de commutation douce ("soft switching").

Il existe un certain nombre de documents qui décrivent l'emploi de convertisseur DC/DC à double pont pour différentes applications et différents mécanismes de commande adaptés pour ces applications. On citera par exemple les documents référencés WO2013/164249A1, US2015/021998A1, US2008/212340A1, US8587975B2. Un autre document de l'art antérieure est le suivant:

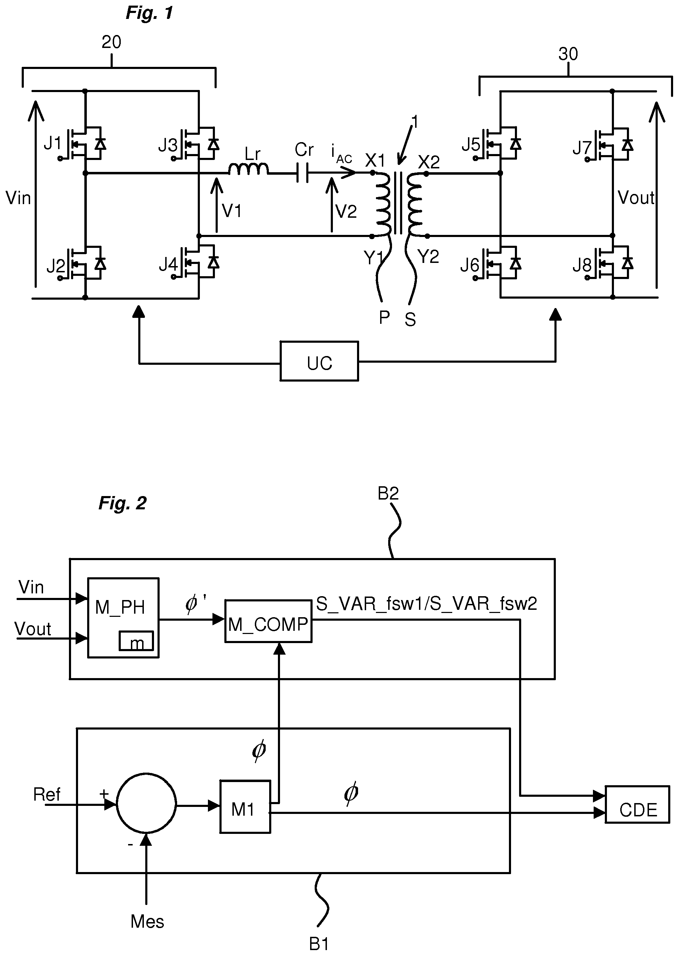

CORRADINI L ET AL: "Minimum Current Opération of Bidirectional Dual-Bridge Series Resonant DC/DC Converters", IEEE TRANSACTIONS ON POWER ELECTRONICS, INSTITUTE OF ELECTRICAL AND ELECTRONICS ENGINEERS, USA, vol. 27, no. 7, 1 juillet 2012 (2012-07-01), pages 3266-3276. En référence à la figure 1, le convertisseur DC/DC à double pont isolé comporte ainsi, en règle générale :

- Un transformateur comprenant un enroulement primaire et un enroulement secondaire.
- Un premier étage de conversion DC/AC connecté à l'enroulement primaire du transformateur.
- Un deuxième étage de conversion AC/DC, monté symétriquement par rapport au premier étage de conversion et connecté à l'enroulement secondaire du transformateur.
- Un circuit inductif (éventuellement résonant) connecté en série sur le lien AC, du côté de l'enroulement primaire.

Les deux étages de conversion sont par exemple bidirectionnels.

En référence à la figure 1, on définit les tensions V1 et V2 qui correspondent aux tensions appliquées de part et d'autre du circuit inductif, du côté AC.

Lors du dimensionnement d'un convertisseur DC/DC à double pont tel que décrit ci-dessus, il est connu que le point de fonctionnement optimum, pour lequel le courant ($i_{AC}$) qui traverse les interrupteurs et le transformateur est minimisé, correspond au cas où les deux tensions V1 et V2 définies ci-dessus sont égales. En fonction de la tension Vin appliquée en entrée du premier étage de conversion et de la tension Vout obtenue en sortie du deuxième étage de conversion, le rapport de transformation du transformateur peut être ajusté pour satisfaire l'égalité entre les deux tensions V1 et V2. Cependant, le choix du rapport de transformation du transformateur est fixe et, en fonctionnement, les tensions Vin et Vout évoluent, ce qui ne permet plus de garantir l'égalité entre les deux tensions V1 et V2 et donc la minimisation du courant. Pour maintenir un courant $i_{AC}$ faible, plusieurs solutions ont déjà été proposées mais celles-ci ne sont jamais totalement satisfaisantes. A titre d'exemple, ces solutions connues sont les suivantes :

- Employer un circuit résonant comme représenté sur la figure 1. Cette solution ne permet cependant pas d'obtenir un fonctionnement optimum pour tous les points de fonctionnement du convertisseur.
- Employer une inductance de fuite à forte réactance connectée à l'enroulement primaire, à la place du circuit résonant. Mais cela aura pour conséquence une limitation de la puissance transmissible et une diminution du facteur de puissance.
- Contrôler les interrupteurs avec des modulations de type trapézoïdale ou triangulaire mais cela nécessite des capacités de traitement supplémentaires.
- Commander le convertisseur en mode discontinu, comme décrit dans la publication intitulée ″High Efficiency modified Dual-Active Bridge DC-DC Converter for Photovoltaic Integration" par Muhammad Muneeb Ur Rehman*, Rohail Hassan, Nauman Zaffar - Department of Electrical Engineering, SBA School of Science & Engineering Lahore University of Management Sciences Lahore, Pakistan.

Le but de l'invention est de proposer une solution qui permette d'obtenir un fonctionnement optimal d'un convertisseur DC/DC à double pont, quelle que soit l'évolution des tensions en entrée et en sortie, donc même si l'égalité entre les deux tensions V1 et V2 n'est plus garantie.

**Exposé de l'invention**

Ce but est atteint par un procédé de commande mis en œuvre dans une unité de traitement pour commander un convertisseur DC/DC présentant une topologie à double pont commandé par l'unité de traitement pour assurer une conversion entre une première tension continue et une deuxième tension continue en mettant en œuvre une boucle de régulation principale et comprenant deux étages de conversion, dits premier étage de conversion et deuxième étage de conversion, reliés entre eux via un circuit inductif, ledit procédé étant adapté pour :

- Déterminer un angle de déphasage optimal entre une première tension alternative et une deuxième tension alternative présentes de part et d'autre du circuit inductif, ledit angle de déphasage optimal correspondant à un point de fonctionnement optimal pour lequel le courant qui traverse le circuit inductif est en phase avec la première tension alternative ou la deuxième tension alternative et présente un déphasage minimal avec respectivement la deuxième tension alternative ou la première tension alternative,
- Déterminer une fréquence de commutation ou agir sur la fréquence de commutation à appliquer aux interrupteurs, de manière à faire correspondre un angle de déphasage courant correspondant au déphasage entre la première tension alternative et la deuxième tension alternative et issu de la boucle de régulation principale avec l'angle de déphasage optimal.

Le procédé de l'invention s'applique de manière identique pour un convertisseur de type DC/DC à topologie double pont dont les deux étages de conversion sont reliés de manière isolée (par un transformateur) ou non isolée. De même, il s'applique également lorsqu'un condensateur est relié en série avec le circuit inductif, formant alors un circuit résonant.

Selon une particularité, le procédé est adapté pour déterminer un ratio à partir de ladite première tension alternative et de ladite deuxième tension alternative.

Selon une autre particularité, l'angle de déphasage optimal est déterminé à partir des relations :

$$\begin{cases} \phi' = \cos^{-1}(k) & si\ k < 1 \\ \phi' = \cos^{-1}\left(\dfrac{1}{k}\right) si\ k > 1 \end{cases}$$

Dans lesquelles :

- $\phi'$ correspond à l'angle de déphasage optimal,
- $k$ correspond audit ratio.

Selon un premier mode de réalisation, le procédé de l'invention est adapté pour comparer ledit angle de déphasage optimal déterminé à l'angle de déphasage courant issu de la boucle de régulation principale.

Selon ce premier mode de réalisation, le procédé est adapté pour déterminer un signal d'augmentation ou de diminution de la fréquence de commutation après avoir comparé ledit angle de déphasage optimal et l'angle de déphasage courant issu de la boucle de régulation principale.

Selon un deuxième mode de réalisation, le procédé est adapté pour déterminer une différence entre ledit angle de déphasage optimal et l'angle de déphasage courant issu de la boucle de régulation principale et pour injecter ladite différence dans un régulateur en vue de déterminer une correction de fréquence à appliquer à ladite fréquence de commutation pour faire converger l'angle de déphasage courant vers l'angle de déphasage optimal.

Selon un troisième mode de réalisation, le procédé est adapté pour mémoriser dans une table, pour différentes valeurs de puissance à transmettre, chaque valeur de fréquence de commutation déterminée en liaison avec chaque valeur de ratio calculée.

L'invention concerne également un système de commande pour commander un convertisseur DC/DC présentant une topologie à double pont comprenant deux étages de conversion, dits premier étage de conversion et deuxième étage de conversion, comprenant chacun plusieurs interrupteurs commandés, lesdits deux étages de conversion étant reliés entre eux via un circuit inductif, ledit convertisseur DC/DC étant commandé par ledit système pour convertir une première tension continue en une deuxième tension continue en mettant en œuvre une boucle de régulation principale, ledit système étant caractérisé en ce qu'il comporte :

- Un premier module de détermination d'un angle de déphasage optimal entre une première tension alternative et une deuxième tension alternative présentes de part et d'autre du circuit inductif, ledit angle de déphasage optimal correspondant à un point de fonctionnement optimal pour lequel le courant qui traverse le circuit inductif est en phase avec la première tension alternative ou la deuxième tension alternative et présente un déphasage minimal avec respectivement la deuxième tension alternative ou la première tension alternative,

- Un deuxième module pour déterminer une fréquence de commutation ou agir sur une fréquence de commutation à appliquer aux interrupteurs, de manière à faire correspondre un angle de déphasage courant correspondant au déphasage entre la première tension alternative et la deuxième tension alternative et issu de la boucle de régulation principale avec l'angle de déphasage optimal.

Selon une particularité, le système comporte un module de détermination d'un ratio à partir de ladite première tension alternative et de ladite deuxième tension alternative.

Selon une autre particularité, l'angle de déphasage optimal est déterminé à partir des relations :

$$\begin{cases} \phi' = \cos^{-1}(k) & si\ k < 1 \\ \phi' = \cos^{-1}\left(\dfrac{1}{k}\right) si\ k > 1 \end{cases}$$

Dans lesquelles :

- $\phi'$ correspond à l'angle de déphasage optimal,
- $k$ correspond audit ratio.

Selon un premier mode de réalisation, le système de l'invention comporte un module de comparaison dudit angle de déphasage optimal avec l'angle de déphasage courant issu de la boucle de régulation principale.

Selon ce premier mode de réalisation, le module de comparaison est agencé pour déterminer un signal d'augmentation ou de diminution de la fréquence de commutation en fonction du résultat de la comparaison entre ledit angle de déphasage optimal et l'angle de déphasage courant issu de la boucle de régulation principale.

Selon un deuxième mode de réalisation, le système comporte un module de détermination de la différence entre ledit angle de déphasage optimal et l'angle de déphasage courant issu de la boucle de régulation principale et de détermination d'une correction de fréquence à appliquer à ladite fréquence de commutation pour faire converger l'angle de déphasage courant vers l'angle de déphasage optimal en fonction de ladite différence.

Selon un troisième mode de réalisation, le troisième module est agencé pour mémoriser dans une table, pour différentes valeurs de puissance à transmettre, chaque valeur de fréquence de commutation déterminée en liaison avec chaque valeur de ratio.

L'invention concerne également programme d'ordinateur comprenant des modules logiciels destinés à être exécutés sur un ordinateur pour mettre en œuvre le procédé tel que défini ci-dessus.

L'invention concerne également le support de stockage lisible par un ordinateur comportant le programme d'ordinateur défini ci-dessus.

**Brève description des figures**

D'autres caractéristiques et avantages vont apparaître dans la description détaillée qui suit faite en regard des dessins annexés dans lesquels :

- La figure 1 représente un convertisseur DC/DC à double pont.
- La figure 2 représente un premier exemple de synoptique qui décrit le procédé de commande de l'invention mis en place pour la commande du convertisseur DC/DC à double pont.
- La figure 3 représente un deuxième exemple de synoptique qui décrit le procédé de commande de l'invention mis en place pour la commande du convertisseur DC/DC à double pont.
- La figure 4 représente un troisième exemple de synoptique qui décrit le procédé de commande de l'invention mis en place pour la commande du convertisseur DC/DC à double pont.
- Les figures 5A et 5B représentent des chronogrammes illustrant l'intérêt du procédé de commande de l'invention.

**Description détaillée d'au moins un mode de réalisation**

L'invention concerne la commande appliquée à un convertisseur DC/DC à double pont, également appelé "Dual Active Bridge".

De manière connue, un convertisseur DC/DC à double pont comporte deux étages de conversion reliés entre eux via un circuit inductif. Par ailleurs, il est également connu de remplacer le circuit inductif simple (inductance de fuite seule) par un circuit résonant (inductance+condensateur en série).

La connexion entre les deux étages de conversion peut être réalisée de manière isolée (en plaçant un transformateur) ou de manière non isolée (connexion directe entre les deux étages de conversion, sans isolation).

Dans la suite de la description, l'invention est décrite pour un convertisseur DC/DC à double pont et résonant mais il faut comprendre qu'elle peut tout à fait s'adapter pour un convertisseur DC/DC à double pont et non résonant (avec un simple circuit inductif - inductance de fuite). De même, l'invention est décrite pour un convertisseur DC/DC à double pont et isolé par un transformateur mais elle s'applique également de manière identique pour un convertisseur DC/DC à double pont et non isolé, c'est-à-dire sans transformateur.

En référence à la figure 1, un convertisseur DC/DC en topologie à double pont, à mode résonant et isolé, comporte les éléments suivants :

- Un transformateur 1 comprenant deux premières bornes X1, Y1, entre lesquelles est connecté un enroulement primaire P, et deux deuxièmes bornes X2, Y2, entre lesquelles est connecté un enroulement secondaire S.
- Un circuit résonant sur le lien dit AC situé entre le premier étage de conversion et le premier enroulement et qui comporte un condensateur de résonance Cr en série avec une inductance Lr.
- Un premier étage de conversion 20 de type DC/AC connecté à l'enroulement primaire P du transformateur. Il comporte deux lignes d'alimentation entre lesquelles est appliquée une tension continue Vin et deux bras de commutation connectés entre les deux lignes d'alimentation et destinés à convertir la tension continue fournie en une tension alternative ou inversement. Chaque bras de commutation comporte au moins deux interrupteurs (J1, J2 pour le premier bras de commutation et J3, J4 pour le deuxième bras de commutation) et un point milieu de connexion situé entre ses deux interrupteurs. Le premier point milieu de connexion est connecté à la borne X1 de l'enroulement primaire P du transformateur et le deuxième point milieu de connexion est connecté à la borne Y1 de l'enroulement primaire P du transformateur.
- Un deuxième étage de conversion de type AC/DC connecté à l'enroulement secondaire S du transformateur. Il comporte deux lignes d'alimentation entre lesquelles est appliquée la tension Vout et deux bras de commutation connectés entre les deux lignes d'alimentation et destinés à convertir une tension alternative en une tension continue ou inversement. Chaque bras de commutation comporte au moins deux interrupteurs (J5, J6 pour le premier bras de commutation et J7, J8 pour le deuxième bras de commutation) et un point milieu de connexion situé entre ses deux interrupteurs. Le premier point milieu de connexion est connecté à la borne X2 de l'enroulement secondaire S du transformateur et le deuxième point milieu de connexion est connecté à la borne Y2 de l'enroulement secondaire S du transformateur.

Les interrupteurs J1-J8 peuvent être des transistors de tous types, par exemple des transistors unidirectionnels en tension et bidirectionnels en courant de type IGBT ou du type à effet de champ (FET). Dans ce dernier cas, il s'agira par exemple plus particulièrement de transistors de type MOSFET (comme sur la figure 1) ou JFET. Il pourra par exemple s'agir de transistors MOSFET en carbure de silicium. Compte tenu des transistors employés, le convertisseur DC/DC à topologie double pont fonctionne de manière bidirectionnelle.

Les interrupteurs du premier étage de conversion 20 et les interrupteurs du deuxième étage de conversion 30 sont commandés par une unité de traitement UC.

Lors d'un transfert de puissance du premier étage de conversion 20 vers le deuxième étage de conversion 30, les interrupteurs J1-J4 du premier étage de conversion 20 sont commandés par l'unité de traitement UC pour convertir, durant chaque période de découpage, une tension continue Vin appliquée en entrée entre les deux lignes d'alimentation du premier étage de conversion 20 en une tension alternative aux bornes de l'enroulement primaire P du transformateur 1. Durant chaque période de découpage, les interrupteurs du deuxième étage de conversion 30 sont commandés par l'unité de traitement UC pour convertir une tension alternative aux bornes de l'enroulement secondaire S en une tension continue Vout en sortie entre les deux lignes d'alimentation du deuxième étage de conversion.

Lors d'un transfert de puissance du deuxième étage de conversion 30 vers le premier étage de conversion 20, les interrupteurs du deuxième étage de conversion sont commandés par l'unité de traitement UC pour convertir, durant chaque période de découpage, la tension continue Vout appliquée en entrée entre les deux lignes d'alimentation du deuxième étage de conversion 30 en une tension alternative aux bornes de l'enroulement secondaire S du transformateur. Durant chaque période de découpage, les interrupteurs du premier étage de conversion 20 sont commandés par l'unité de traitement pour convertir une tension alternative aux bornes de l'enroulement primaire P en une tension continue Vin en sortie entre les deux lignes d'alimentation du premier étage de conversion 20.

Pour des raisons de simplification, l'invention sera explicitée dans le cas d'un transfert de puissance du premier étage de conversion 20 vers le deuxième étage de conversion 30. Cependant, le convertisseur DC/DC étant très souvent bidirectionnel, il faut comprendre qu'elle pourra s'appliquer de manière symétrique pour un transfert de puissance du deuxième étage de conversion 30 vers le premier étage de conversion 20.

La problématique technique, évoquée ci-dessus dans la partie introductive de la description, vient du fait qu'il n'est pas possible de maintenir une égalité entre la tension V1 et la tension V2 qui sont les tensions générées de part et d'autre du circuit résonant (V1 est la tension entre les deux points milieux de connexion des deux bras de commutation du premier étage de conversion - V2 est la tension entre les points X1 et Y1 du premier enroulement). Si les deux étages de conversion sont connectés via un simple circuit inductif, les deux tensions alternatives V1 et V2 sont celles présentes de part et d'autre du circuit inductif. Il faut noter que ces tensions sont présentes même si la topologie n'est pas isolée par le transformateur.

Par ailleurs, le lien AC présentant normalement une réactance faible, une faible variation des tensions V1 et V2 provoque une importante variation du courant réactif.

L'invention vise à tenir compte de la différence entre les deux tensions V1 et V2 pour adapter le déphasage généré entre ces deux tensions.

L'invention s'applique uniquement pour la commande des deux convertisseurs en vue d'obtenir des tensions Vin et Vout présentant des impulsions rectangulaires à deux niveaux de tension et avec un rapport cyclique égal à 50%.

De manière connue, l'unité de traitement UC met en œuvre une boucle de régulation principale B1 pour commander le convertisseur DC/DC.

Cette boucle de régulation principale B1 est destinée à déterminer l'angle de déphasage $\phi$ généré entre les tensions alternatives V1 et V2 pour atteindre une référence *Ref* appliquée en entrée. La référence *Ref* appliquée en entrée peut être de type tension, courant et/ou puissance à transmettre. En fonctionnement en boucle fermée, la référence *Ref* est comparée à une mesure *Mes* de la grandeur correspondante et la différence entre les deux valeurs est injectée dans un module M1 de calcul en vue d'en déduire ledit angle de déphasage $\phi$ pour atteindre la référence *Ref* imposée en entrée. La commande CDE des interrupteurs sera par exemple mise en œuvre en employant une MLI (Modulation en Largeur d'Impulsions).

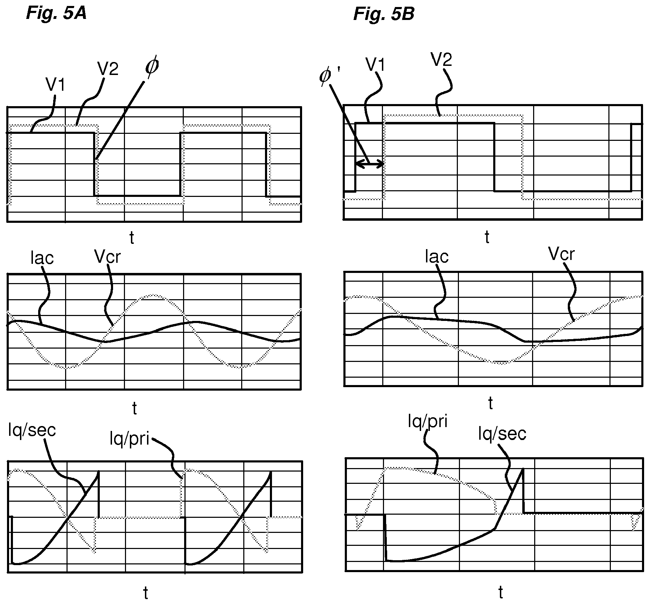

Les figures 5A et 5B représentent des courbes montrant les deux tensions V1 et V2 générés et un angle de déphasage $\phi$ appliqué entre ces deux tensions V1, V2. La figure 2 montre également le niveau du courant $i_{AC}$ qui circule dans le lien AC défini ci-dessus.

L'invention concerne un procédé de commande mis en œuvre dans l'unité de traitement UC des deux convertisseurs 20, 30 et qui permet de déterminer un point de fonctionnement optimal, pour lequel le courant $i_{AC}$ qui traverse le circuit résonant (ou circuit inductif si topologie non résonante), et donc l'enroulement primaire P du transformateur 1, est en phase avec l'une des deux tensions V1 ou V2 et présente un déphasage minimal avec l'autre tension V1 ou V2. Ainsi, pour ce point de fonctionnement optimal, le facteur de puissance dans le lien AC est maximisé, permettant ainsi de réduire le courant et les pertes dans le convertisseur DC/DC. Ce point de fonctionnement optimal correspond à un angle de déphasage précis, dit angle de déphasage optimal $\phi'$, généré entre les deux tensions V1 et V2.

Le procédé de commande de l'invention décrit plus précisément ci-dessous pourra être mis en œuvre sous la forme d'un programme d'ordinateur comportant plusieurs modules logiciels adaptés à sa mise en œuvre et le système de commande qui met en œuvre ce procédé comportera au moins un ordinateur. Cet ordinateur inclut au moins ladite unité de traitement UC décrite ci-dessus et destinée à la commande du convertisseur DC/DC. Ce programme d'ordinateur sera par exemple stocké sur un support lisible par l'ordinateur.

L'angle de déphasage optimal $\phi'$ évoqué ci-dessus est déterminé par l'unité de traitement UC en mettant en œuvre, dans les deux premières variantes de réalisation décrites ci-dessous, une boucle de contrôle B2 spécifique.

Dans une première variante de réalisation illustrée par la figure 2, cette boucle de contrôle B2 spécifique suit l'algorithme décrit ci-dessous.

Dans une première étape, l'unité de traitement exécute un module M_PH de détermination de l'angle de déphasage optimal.

Pour cela, ce module M_PH reçoit en entrée :

- La tension Vin, qui est par exemple mesurée à l'aide d'un capteur placé entre les deux lignes d'alimentation du premier étage de conversion 20.
- La tension Vout, qui est par exemple mesurée à l'aide d'un capteur placé entre les deux lignes d'alimentation du deuxième étage de conversion 30.

De la tension Vin, le module M_PH en déduit la tension V1 qui est identique et la tension V2 qui correspond à la tension Vout divisée par le rapport de transformation m du transformateur (ceci étant valable car les deux étages de conversion sont commandés en pleine onde avec un rapport cyclique de 50%). On peut noter que dans une solution non isolée, la tension V2 serait identique à la tension Vout.

A partir des deux tensions V1 et V2, le module M_PH détermine un ratio désigné $k$ et exprimé par la relation suivante :

$$k = \frac{V_2}{V_1}$$

Ensuite, le module M_PH exécuté par l'unité de traitement UC détermine l'angle de déphasage optimal $\phi'$ à l'aide des relations suivantes :

$$\begin{cases} \phi' = cos^{-1}(k) \; si \; k < 1 \\ \phi' = cos^{-1}\left(\frac{1}{k}\right) si \; k > 1 \end{cases}$$

Dans une deuxième étape, l'unité de traitement UC met en œuvre un module de comparaison M_COMP de l'angle de déphasage optimal ainsi déterminé avec l'angle de déphasage $\phi$ courant issu de la boucle de régulation principale B1. A partir de cette comparaison, le module M_COMP détermine si la fréquence de commutation doit être augmentée ou diminuée pour faire converger l'angle de déphasage courant $\phi$ vers l'angle de déphasage optimal $\phi'$. En effet, il est connu que la puissance $P_{dc}$ à transmettre est liée à la réactance Xr et à l'angle de déphasage $\phi$, selon la relation suivante :

$$P_{dc} = \frac{V_1^2 k}{Xr} sin(\Phi)$$

Avec :

- Xr la réactance du circuit résonant à la fréquence de résonance.

Connaissant l'angle de déphasage optimal $\phi'$ et la puissance $P_{dc}$ à transmettre, il est donc possible de déterminer la valeur de la réactance Xr' adaptée, à l'aide de la relation ci-dessous :

$$X_r' = \frac{V_1^2 k}{P_{dc}} sin(\Phi')$$

La réactance dépendant de la fréquence de commutation, il suffit donc de faire varier la fréquence de commutation afin d'obtenir la réactance désirée pour parvenir au point de fonctionnement optimal défini par l'angle de déphasage optimal $\phi'$. On comprend de la démonstration ci-dessus que, lorsqu'on est au-dessus de la fréquence de résonance du circuit résonant, si on décide d'augmenter la fréquence de commutation du convertisseur, cela entraîne une augmentation de la réactance du circuit résonant et donc une diminution de la puissance transmise (cf. l'équation ci-dessus). Pour maintenir la puissance transmise à une valeur constante, la boucle de régulation du convertisseur va augmenter l'angle de déphasage $\phi$ et ainsi faire converger l'angle de déphasage $\phi$ vers l'angle de déphasage optimal.
Ainsi on a :

Si $\phi' > \phi$ alors le module M_COMP génère un signal S_VAR_fsw1 pour augmenter la fréquence de commutation. Ce signal est envoyé à la commande CDE des interrupteurs.
Si $\phi' < \phi$, le module M_COMP génère un signal S_VAR_fsw2 pour diminuer la fréquence de commutation. Ce signal est envoyé à la commande CDE des interrupteurs.

La boucle de contrôle qui commande une augmentation ou une diminution de la fréquence de commutation est mise en œuvre jusqu'à obtenir $\phi' = \phi$. Une fois l'égalité atteinte, une temporisation est par exemple activée, avant une nouvelle exécution de la boucle de contrôle B2.
La boucle de contrôle B2 ainsi décrite est mise en œuvre en parallèle de la boucle de régulation principale B1. On comprend également que cette boucle de contrôle B2 et la boucle de régulation principale B1 doivent présenter des dynamiques de fonctionnement différentes. La boucle de régulation principale doit en effet disposer d'une dynamique plus rapide pour permettre la convergence de l'angle de déphasage $\phi$ vers l'angle de déphasage optimal $\phi'$.

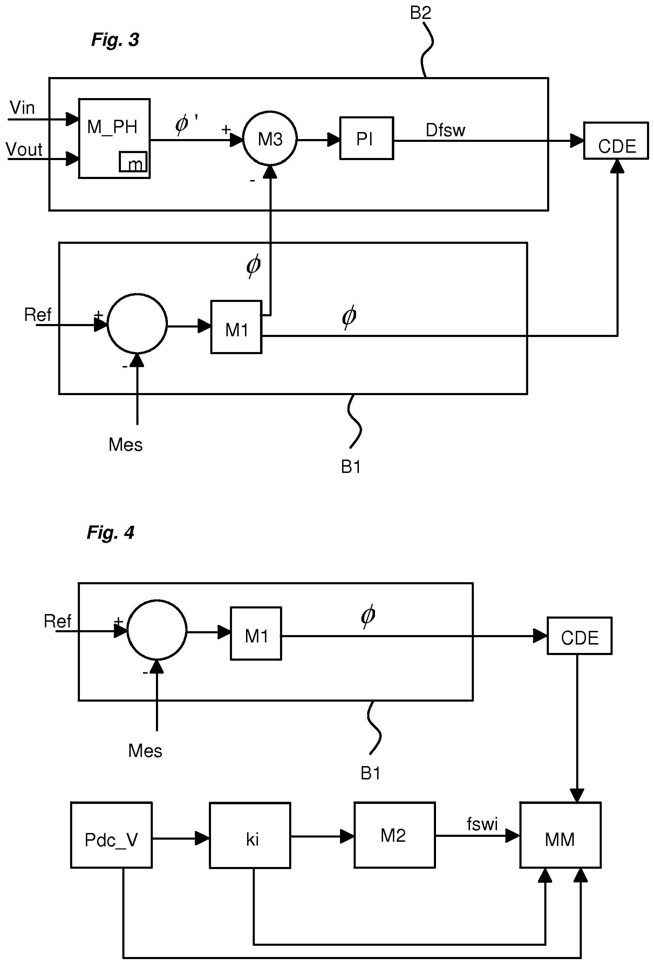

La figure 3 illustre une variante de réalisation du procédé de commande de l'invention. Dans cette variante, la boucle de contrôle B2 calcule directement une correction à appliquer à la fréquence de commutation. Dans cette variante de réalisation, l'algorithme suivi est décrit ci-dessous.

Dans une première étape, l'unité de traitement UC exécute le module M_PH de détermination de l'angle de déphasage optimal.

Pour cela, ce module reçoit en entrée :

- La tension Vin, qui est par exemple mesurée à l'aide d'un capteur placé entre les deux lignes d'alimentation du premier étage de conversion 20. Ce capteur fera par exemple partie du système de commande de l'invention.

- La tension Vout, qui est par exemple mesurée à l'aide d'un capteur placé entre les deux lignes d'alimentation du deuxième étage de conversion 30. Ce capteur fera par exemple partie du système de commande de l'invention.

De la tension Vin, le module en déduit la tension V1 qui est identique et la tension V2 qui correspond à la tension Vout divisée par le rapport de transformation m du transformateur (ceci étant valable car les deux étages de conversion sont commandés en pleine onde avec un rapport cyclique de 50%). Comme précédemment, on peut noter que dans une solution non isolée, la tension V2 serait identique à la tension Vout.

A partir des deux tensions V1 et V2, le module détermine un ratio désigné *k* et exprimé par la relation suivante :

$$k = \frac{V_2}{V_1}$$

Ensuite, le module M_PH exécuté par l'unité de traitement UC détermine l'angle de déphasage optimal à l'aide des relations suivantes :

$$\begin{cases} \phi' = cos^{-1}(k) \; si \; k < 1 \\ \phi' = cos^{-1}\left(\frac{1}{k}\right) si \; k > 1 \end{cases}$$

Dans une deuxième étape, l'unité de traitement exécute un module M3 de détermination de la différence entre l'angle de déphasage $\phi$ courant issu de la boucle de régulation principale et l'angle de déphasage optimal $\phi'$ déterminé par le module M_PH. La différence déterminée est injectée dans un régulateur à action proportionnelle intégrale (PI) en vue d'en déduire la correction Dfsw à appliquer à la fréquence de commutation qui permet de faire converger l'angle de déphasage $\phi$ courant issu de la boucle de régulation principale vers l'angle de déphasage optimal $\phi'$ déterminé par le module M_PH.

La correction déterminée (qui peut être positive ou négative) Dfsw est ensuite envoyée à la commande CDE des interrupteurs qui reçoit en parallèle l'angle de déphasage $\phi$ issu de la boucle de régulation principale B1.

Dans une autre variante de réalisation illustrée par la figure 4, une procédure d'identification est mise en place préalablement au fonctionnement normal du convertisseur, pour déterminer et mémoriser des couples liant des valeurs de *k*, désignées *ki*, avec des valeurs de fréquence de commutation fswi, en fonction de la valeur de la puissance transmise Pdc_V. Cette procédure d'identification est mise en œuvre en balayant toute la plage de puissance Pdc et pour chaque valeur de puissance Pdc_V, un module M2 détermine, pour chaque valeur de *ki*, la fréquence de commutation fswi à appliquer en vue d'obtenir l'angle de déphasage optimal $\phi'$.

Connaissant le déphasage optimal $\phi'$ et la puissance à transmettre, il est possible de trouver la valeur de la réactance nécessaire :

$$X'_r = \frac{V_1^2 ki}{P_{dc\_V}} \sin(\Phi')$$

Par conséquent, connaissant les valeurs des composants du circuit résonant, il est possible de calculer la fréquence de commutation nécessaire :

$$X'_r = 2\pi L_r f_{swi} - \frac{1}{2\pi C_r f_{swi}}$$

Et donc

$$\mathrm{X}'_r f_{swi} - 2\pi L_r f_{swi}^2 + \frac{1}{2\pi C_r} = 0$$

Il s'agit d'une équation du second degré qui peut être facilement résolue. Les solutions de l'équation sont :

$$f_{\mathrm{swi\_1}} = \frac{X'_r - \sqrt{\Delta}}{4\pi L_r} \; ; f_{swi\_2} = \frac{X'_r + \sqrt{\Delta}}{4\pi L_r}$$

Avec le déterminant défini par la relation suivante :

$$\Delta = \mathrm{X}_r'^2 + \frac{4L_r}{C_r}$$

La première solution ($f_{swi\_1}$) n'étant pas valable, la seconde solution ($f_{swi\_2}$) sera utilisée.

L'unité de traitement UC mémorise ainsi dans ses moyens de mémorisation MM, une table liant chaque valeur de puissance Pdc_V à chaque ratio ki et à chaque fréquence fswi déterminée.

En fonctionnement normal, la commande CDE consulte la table mémorisée en vue d'en extraire la fréquence de commutation à appliquer en fonction des conditions de fonctionnement.

Les figures 5A et 5B permettent d'illustrer les avantages procurés par l'invention.

Dans le premier cas illustré par la figure 5A, l'angle de déphasage $\phi$ appliqué entre les deux tensions V1 et V2 n'est donc pas optimal. Dans le deuxième cas illustré par la figure 5B, le procédé de commande de l'invention est mis en œuvre permettant d'obtenir un angle de déphasage optimal $\phi'$ entre les deux impulsions de tension V1 et V2. Sur ces deux figures, on a :

- Les courbes des tensions V1 et V2.

- La courbe de variation du courant $i_{AC}$ et celle de la tension Vcr aux bornes du condensateur de résonance.

- La courbe de variation du courant iq_pri dans l'enroulement primaire P et celle du courant iq_sec dans l'enroulement secondaire S du transformateur 1.

Le tableau suivant permet de mieux interpréter ces courbes, pour les deux cas de fonctionnement :

|  | Cas 1 | Cas 2 |
|---|---|---|
| Fréquence de fonctionnement (kHz) | 17 | 27,4 |
| Φ (°) | 7,3 | 36,7 |
| Courant dans le lien AC (A) | 211 | 113 |
| Tension aux bornes du condensateur de résonance | 780 | 280 |
| Courant dans les interrupteurs du premier étage de conversion (A) | 150 | 83 |
| Courant dans les interrupteurs du deuxième étage de conversion (A) | 150 | 83 |
| Courant commuté par les interrupteurs du premier étage de conversion (A) | 227 | 50 |
| Courant commuté par les interrupteurs du deuxième étage de conversion (A) | 300 | 150 |

L'invention présente ainsi de nombreux avantages, parmi lesquels :

- Un algorithme simple, facilement implantable dans une unité de commande d'un convertisseur DC/DC.

- Une solution particulièrement innovante car sa mise en œuvre peut entraîner une augmentation de la fréquence de commutation pour réduire les pertes globales du convertisseur alors qu'il serait plus évident de diminuer cette fréquence de commutation pour obtenir une réduction des pertes par commutation et des pertes par effet joule dans le transformateur.

L'invention a été décrite pour un convertisseur DC/DC à double pont résonant mais comme déjà évoqué ci-dessus, celui-ci pourrait être non résonant, avec un simple circuit inductif formé d'une inductance de fuite. Le procédé s'applique de la même manière que décrite ci-dessus et les différents modules employés pour la mise en œuvre du procédé restent identiques.

**Revendications**

1.  Procédé de commande mis en œuvre dans une unité de traitement (UC) pour commander un convertisseur DC/DC présentant une topologie à double pont commandé par l'unité de traitement (UC) pour assurer une conversion entre une première tension continue (Vin) et une deuxième tension continue (Vout) en mettant en œuvre une boucle de régulation principale (B1) et comprenant deux étages de conversion, dits premier étage de conversion (20) et deuxième étage de conversion (30), connectés entre eux via un circuit inductif, ledit procédé étant **caractérisé en ce qu'**il est adapté pour :

    - Déterminer un angle de déphasage optimal ($\phi'$) entre une première tension alternative et une deuxième tension alternative présentes de part et d'autre du circuit inductif, ledit angle de déphasage optimal correspondant à un point de fonctionnement optimal pour lequel le courant ($i_{AC}$) qui traverse le circuit inductif est en phase avec la première tension alternative (V1) ou la deuxième tension alternative (V2) et présente un déphasage minimal avec respectivement la deuxième tension alternative (V2) ou la première tension alternative (V1),
    - Déterminer une fréquence de commutation ou agir sur la fréquence de commutation à appliquer aux interrupteurs, de manière à faire correspondre un angle de déphasage ($\phi$) courant correspondant au déphasage entre la première tension alternative (V1) et la deuxième tension alternative (V2) et issu de la boucle de régulation principale avec l'angle de déphasage optimal ($\phi'$).

2.  Procédé selon la revendication 1, **caractérisé en ce qu'**il est adapté pour déterminer un ratio ($k$) à partir de ladite première tension alternative (V1) et de ladite deuxième tension alternative (V2).

3.  Procédé selon la revendication 2, **caractérisé en ce que** l'angle de déphasage optimal est déterminé à partir des relations :

$$\begin{cases} \phi' = \cos^{-1}(k) & si\ k < 1 \\ \phi' = \cos^{-1}\left(\dfrac{1}{k}\right) & si\ k > 1 \end{cases}$$

Dans lesquelles :

    - $\phi'$ correspond à l'angle de déphasage optimal,
    - $k$ correspond audit ratio.

4.  Procédé selon l'une des revendications 1 à 3, **caractérisé en ce qu'**il est adapté pour comparer ledit angle de déphasage optimal ($\phi'$) déterminé à l'angle de déphasage ($\phi$) courant issu de la boucle de régulation principale (B1).

5.  Procédé selon la revendication 4, **caractérisé en ce qu'**il est adapté pour déterminer un signal (S_VAR_fsw1, S_VAR_fsw2) d'augmentation ou de diminution de la fréquence de commutation après avoir comparé ledit angle de déphasage optimal ($\phi'$) et l'angle de déphasage ($\phi$) courant issu de la boucle de régulation principale (B1).

6.  Procédé selon l'une des revendications 1 à 3, **caractérisé en ce qu'**il est adapté pour déterminer une différence (Dfsw) entre ledit angle de déphasage optimal ($\phi'$) et l'angle de déphasage ($\phi$) courant issu de la boucle de régulation principale (B1) et pour injecter ladite différence (Dfsw) dans un régulateur en vue de déterminer une correction de fréquence à appliquer à ladite fréquence de commutation (fsw) pour faire converger l'angle de déphasage courant vers l'angle de déphasage optimal.

7.  Procédé selon la revendication 2 ou 3, **caractérisé en ce qu'**il est adapté pour mémoriser dans une table, pour différentes valeurs de puissance à transmettre (Pdc_V), chaque valeur de fréquence de commutation (fswi) déterminée en liaison avec chaque valeur de ratio (*ki*).

8. Système de commande pour commander un convertisseur DC/DC présentant une topologie à double pont comprenant deux étages de conversion, dits premier étage de conversion (20) et deuxième étage de conversion (30), comprenant chacun plusieurs interrupteurs (J1-J8) commandés, lesdits deux étages de conversion étant reliés entre eux via un circuit inductif, ledit convertisseur DC/DC étant commandé par ledit système pour convertir une première tension continue (Vin) en une deuxième tension continue (Vout) en mettant en œuvre une boucle de régulation principale (B1), ledit système étant **caractérisé en ce qu'**il comporte :

   - Un premier module (M_PH) de détermination d'un angle de déphasage optimal (*φ'*) entre une première tension alternative et une deuxième tension alternative présentes de part et d'autre du circuit inductif, ledit angle de déphasage optimal correspondant à un point de fonctionnement optimal pour lequel le courant ($i_{AC}$) qui traverse le circuit inductif est en phase avec la première tension alternative (V1) ou la deuxième tension alternative (V2) et présente un déphasage minimal avec respectivement la deuxième tension alternative (V2) ou la première tension alternative (V1),
   - Un deuxième module pour déterminer une fréquence de commutation ou agir sur une fréquence de commutation à appliquer aux interrupteurs, de manière à faire correspondre un angle de déphasage (*φ*) courant correspondant au déphasage entre la première tension alternative (V1) et la deuxième tension alternative (V2) et issu de la boucle de régulation principale avec l'angle de déphasage optimal (*φ'*).

9. Système selon la revendication 8, **caractérisé en ce qu'**il comporte un module de détermination d'un ratio (*k*) à partir de ladite première tension de ladite deuxième tension.

10. Système selon la revendication 9, **caractérisé en ce que** l'angle de déphasage optimal est déterminé à partir des relations :

$$\begin{cases} \phi' = \cos^{-1}(k) & si\ k < 1 \\ \phi' = \cos^{-1}\left(\dfrac{1}{k}\right) & si\ k > 1 \end{cases}$$

Dans lesquelles :

   - *φ'* correspond à l'angle de déphasage optimal,
   - *k* correspond audit ratio.

11. Système selon l'une des revendications 8 à 10, **caractérisé en ce qu'**il comporte un module (M_COMP) de comparaison dudit angle de déphasage optimal (*φ'*) avec l'angle de déphasage courant (*φ*) issu de la boucle de régulation principale.

12. Système selon la revendication 11, **caractérisé en ce que** le module de comparaison est agencé pour déterminer un signal (S_VAR_fsw1, S_VAR_fsw2) d'augmentation ou de diminution de la fréquence de commutation en fonction du résultat de la comparaison entre ledit angle de déphasage optimal (*φ'*) et l'angle de déphasage (*φ*) courant issu de la boucle de régulation principale (B1).

13. Système selon l'une des revendications 8 à 10, **caractérisé en ce qu'**il comporte un module de détermination de la différence entre ledit angle de déphasage optimal et l'angle de déphasage courant issu de la boucle de régulation principale et de détermination (PI) d'une correction de fréquence (Dfsw) à appliquer à ladite fréquence de commutation (fsw) pour faire converger l'angle de déphasage courant vers l'angle de déphasage optimal en fonction de ladite différence.

14. Système selon la revendication 9 ou 10, **caractérisé en ce que** le troisième module est agencé pour mémoriser dans une table, pour différentes valeurs de puissance à transmettre (Pdc_V), chaque valeur de fréquence de commutation (fswi) déterminée en liaison avec chaque valeur de ratio (*ki*).

15. Programme d'ordinateur comprenant des instructions qui conduisent le système selon la revendication 8 à exécuter les étapes de la méthode selon la revendication 1 à 7.

**16.** Support de stockage lisible par un ordinateur comportant le programme d'ordinateur défini dans la revendication 15.

**Patentansprüche**

1. Steuerverfahren, das in einer Verarbeitungseinheit (UC) implementiert wird, um einen DC/DC-Wandler, der eine Doppelbrückentopologie gesteuert durch die Verarbeitungseinheit (UC) aufweist, zu steuern, um eine Umwandlung zwischen einer ersten Gleichspannung (Vin) und einer zweiten Gleichspannung (Vout) sicherzustellen, indem ein Hauptregelkreis (B1) implementiert wird, und umfassend zwei Umwandlungsstufen, die als erste Umwandlungsstufe (20) und als zweite Umwandlungsstufe (30) bezeichnet werden, die über einen induktiven Schaltkreis miteinander verbunden sind, wobei das Verfahren **dadurch gekennzeichnet ist, dass** es für Folgendes ausgelegt ist:

   - Bestimmen eines optimalen Phasenverschiebungswinkels ($\phi'$) zwischen einer ersten Wechselspannung und einer zweiten Wechselspannung, die beiderseits des induktiven Schaltkreises vorhanden sind, wobei der optimale Phasenverschiebungswinkel einem optimalen Betriebspunkt entspricht, für den der Strom ($i_{AC}$), der den induktiven Schaltkreis durchläuft, in Phase mit der ersten Wechselspannung (V1) oder der zweiten Wechselspannung (V2) ist und eine minimale Verschiebung jeweils mit der zweiten Wechselspannung (V2) oder der ersten Wechselspannung (V1) aufweist,
   - Bestimmen einer Schaltfrequenz oder Beeinflussen der Schaltfrequenz, die auf die Schalter anzuwenden ist, sodass ein aktueller Phasenverschiebungswinkel ($\phi$) der Phasenverschiebung zwischen der ersten Wechselspannung (V1) und der zweiten Wechselspannung (V2) entspricht, und ausgegeben aus dem Hauptregelkreis mit dem optimalen Phasenverschiebungswinkel ($\phi'$).

2. Verfahren nach Anspruch 1, **dadurch gekennzeichnet, dass** es ausgelegt ist, um ein Verhältnis (k) zwischen der ersten Wechselspannung (V1) und der zweiten Wechselspannung (V2) zu bestimmen.

3. Verfahren nach Anspruch 2, **dadurch gekennzeichnet, dass** der optimale Phasenverschiebungswinkel anhand der folgenden Beziehungen bestimmt wird:

$$\begin{cases} \phi' = \cos^{-1}(k) & \textit{falls } k < 1 \\ \phi' = \cos^{-1}\left(\dfrac{1}{k}\right) & \textit{falls } k > 1 \end{cases}$$

   in denen:

   - $\phi'$ dem optimalen Phasenverschiebungswinkel entspricht,
   - $k$ dem Verhältnis entspricht.

4. Verfahren nach einem der Ansprüche 1 bis 3, **dadurch gekennzeichnet, dass** es ausgelegt ist, um den bestimmten optimalen Phasenverschiebungswinkel ($\phi'$) mit dem aktuellen Phasenverschiebungswinkel ($\phi$) zu vergleichen, der aus dem Hauptregelkreis (B1) ausgegeben wird.

5. Verfahren nach Anspruch 4, **dadurch gekennzeichnet, dass** es ausgelegt ist, um ein Signal (S_VAR_fsw1, S_VAR_fsw2) der Erhöhung oder der Reduzierung der Schaltfrequenz zu bestimmen, nachdem der optimale Phasenverschiebungswinkel ($\phi'$) und der aktuelle Phasenverschiebungswinkel ($\phi$), der aus dem Hauptregelkreis (B1) ausgegeben wird, verglichen worden sind.

6. Verfahren nach einem der Ansprüche 1 bis 3, **dadurch gekennzeichnet, dass** es ausgelegt ist, um einen Unterschied (Dfsw) zwischen dem optimalen Phasenverschiebungswinkel ($\phi'$) und dem aktuellen Phasenverschiebungswinkel ($\phi$), der aus dem Hauptregelkreis (B1) ausgegeben wird, zu bestimmen und um den Unterschied (Dfsw) in einen Regler einzugeben, um eine Frequenzkorrektur zu bestimmen, die auf die Schaltfrequenz (fsw) anzuwenden ist, damit der aktuelle Phasenverschiebungswinkel in den optimalen Phasenverschiebungswinkel umgewandelt wird.

7. Verfahren nach Anspruch 2 oder 3, **dadurch gekennzeichnet, dass** es ausgelegt ist, um in einer Tabelle für unterschiedliche zu übertragende Leistungswerte (Pdc_V) jeden Schaltfrequenzwert (fswi) zu speichern, der in Verbindung mit jedem Verhältniswert *(ki)* bestimmt wurde.

**8.** Steuersystem zum Steuern eines DC/DC-Wandlers, der eine Doppelbrückentopologie aufweist, umfassend zwei Umwandlungsstufen, die als erste Umwandlungsstufe (20) und als zweite Umwandlungsstufe (30) bezeichnet werden, die jeweils mehrere angesteuerte Schalter (J1-J8) umfassen, wobei die zwei Umwandlungsstufen über einen induktiven Schaltkreis miteinander verbunden sind, wobei der DC/DC-Wandler durch das System gesteuert wird, um eine erste Gleichspannung (Vin) in eine zweite Gleichspannung (Vout) umzuwandeln, indem ein Hauptregelkreis (B1) implementiert wird, wobei das System **dadurch gekennzeichnet ist, dass** es Folgendes umfasst:

- ein erstes Modul (M_PH) zum Bestimmen eines optimalen Phasenverschiebungswinkels ($\phi'$) zwischen einer ersten Wechselspannung und einer zweiten Wechselspannung, die beiderseits des induktiven Schaltkreises vorhanden sind, wobei der optimale Phasenverschiebungswinkel einem optimalen Betriebspunkt entspricht, für den der Strom ($i_{AC}$), der den induktiven Schaltkreis durchläuft, in Phase mit der ersten Wechselspannung (V1) oder der zweiten Wechselspannung (V2) ist und eine minimale Verschiebung jeweils mit der zweiten Wechselspannung (V2) oder der ersten Wechselspannung (V1) aufweist,
- ein zweites Modul zum Bestimmen einer Schaltfrequenz oder Beeinflussen einer Schaltfrequenz, die auf die Schalter anzuwenden ist, sodass ein aktueller Phasenverschiebungswinkel ($\phi$) der Phasenverschiebung zwischen der ersten Wechselspannung (V1) und der zweiten Wechselspannung (V2) entspricht, und ausgegeben aus dem Hauptregelkreis mit dem optimalen Phasenverschiebungswinkel ($\phi'$).

**9.** System nach Anspruch 8, **dadurch gekennzeichnet, dass** es ein Modul zum Bestimmen eines Verhältnisses (k) zwischen der ersten Spannung und der zweiten Spannung umfasst.

**10.** System nach Anspruch 9, **dadurch gekennzeichnet, dass** der optimale Phasenverschiebungswinkel anhand der folgenden Beziehungen bestimmt wird:

$$\begin{cases} \phi' = \cos^{-1}(k) & \text{falls } k < 1 \\ \phi' = \cos^{-1}\left(\dfrac{1}{k}\right) & \text{falls } k > 1 \end{cases}$$

in denen:

- $\phi'$ dem optimalen Phasenverschiebungswinkel entspricht,
- $k$ dem Verhältnis entspricht.

**11.** System nach einem der Ansprüche 8 bis 10, **dadurch gekennzeichnet, dass** es ein Modul (M COMP) zum Vergleichen des optimalen Phasenverschiebungswinkels ($\phi'$) mit dem aktuellen Phasenverschiebungswinkel ($\phi$), der aus dem Hauptregelkreis ausgegeben wird, umfasst.

**12.** System nach Anspruch 11, **dadurch gekennzeichnet, dass** das Modul zum Vergleichen ausgebildet ist, um ein Signal (S_VAR_fsw1, S_VAR_fsw2) der Erhöhung oder der Reduzierung der Schaltfrequenz abhängig von dem Ergebnis des Vergleichs zwischen dem optimalen Phasenverschiebungswinkel ($\phi'$) und dem aktuellen Phasenverschiebungswinkel ($\phi$), der aus dem Hauptregelkreis (B1) ausgegeben wird, zu bestimmen.

**13.** System nach einem der Ansprüche 8 bis 10, **dadurch gekennzeichnet, dass** es ein Modul zum Bestimmen des Unterschieds zwischen dem optimalen Phasenverschiebungswinkel und dem aktuellen Phasenverschiebungswinkel, der aus dem Hauptregelkreis ausgegeben wird, und zum Bestimmen (PI) einer Korrekturfrequenz (Dfsw) umfasst, die auf die Schaltfrequenz (fsw) anzuwenden ist, damit der aktuelle Phasenverschiebungswinkel abhängig von dem Unterschied in den optimalen Phasenverschiebungswinkel umgewandelt wird.

**14.** System nach Anspruch 9 oder 10, **dadurch gekennzeichnet, dass** das dritte Modul ausgebildet ist, um in einer Tabelle für unterschiedliche zu übertragende Leistungswerte (Pdc_V) jeden Schaltfrequenzwert (fswi) zu speichern, der in Verbindung mit jedem Verhältniswert *(ki)* bestimmt wurde.

**15.** Computerprogramm, das Anweisungen umfasst, die das System nach Anspruch 8 dazu veranlassen, die Schritte des Verfahrens nach Anspruch 1 bis 7 auszuführen.

**16.** Speichermedium, das von einem Computer lesbar ist, der das Computerprogramm umfasst, das in Anspruch 15 definiert ist.

**Claims**

1.  Control method implemented in a processing unit (UC) for controlling a DCDC converter having a dual bridge topology controlled by the processing unit (UC) so as to ensure conversion between a first direct current voltage (Vin) and a second direct current voltage (Vout) by implementing a main control loop (B1) and comprising two conversion stages, referred to as first conversion stage (20) and second conversion stage (30), connected together via an inductive circuit, said method being **characterised in that** it is suitable for:

    - determining an optimum phase shift angle ($\phi$) between a first alternating current voltage and a second alternating current voltage present on either side of the inductive circuit, said optimum phase shift angle corresponding to an optimum functioning point for which the current ($i_{AC}$) that passes through the inductive circuit is in phase with the first alternating current voltage (V1) or the second alternating current voltage (V2) and has a minimum phase shift respectively with the second alternating current voltage (V2) or the first alternating current voltage (V1),
    - determining a switching frequency or acting on the switching frequency to be applied to the switches, so as to make a current phase shift angle ($\phi$) corresponding to the phase shift between the first alternating current voltage (V1) and the second alternating current voltage (V2) and coming from the main control loop correspond to the optimum phase shift angle ($\phi$).

2.  Method according to Claim 1, **characterised in that** it is suitable for determining a ratio ($k$) from said first alternating current voltage (V1) and said second alternating current voltage (V2).

3.  Method according to Claim 2, **characterised in that** the optimum phase shift angle is determined from relations:

$$\begin{cases} \phi' = \cos^{-1}(k) & \text{if } k < 1 \\ \phi' = \cos^{-1}\left(\dfrac{1}{k}\right) & \text{if } k > 1 \end{cases}$$

wherein:

    - $\phi'$ corresponds to the optimum phase shift angle,
    - $k$ corresponds to said ratio.

4.  Method according to one of Claims 1 to 3, **characterised in that** it is suitable for comparing said determined optimum phase shift angle ($\phi'$) with the current phase shift angle ($\phi$) coming from the main control loop (B1).

5.  Method according to Claim 4, **characterised in that** it is suitable for determining an increase or reduction signal (S_VAR_ fsw1, S_VAR_fsw2) of the switching frequency after having compared said optimum phase shift angle ($\phi'$) and the current phase shift angle ($\phi$) coming from the main control loop (B1).

6.  Method according to one of Claims 1 to 3, **characterised in that** it is suitable for determining a difference (Dfsw) between said optimum phase shift angle ($\phi'$) and the current phase shift angle ($\phi$) coming from the main control loop (B1) and for injecting said difference (Dfsw) into a controller in the aim of determining a frequency correction to be applied to said switching frequency (fsw) so as to make the current phase shift angle converge towards the optimum phase shift angle.

7.  Method according to Claim 2 or 3, **characterised in that** it is suitable for memorising in a table, for different power values to be transmitted (Pdc_V), each switching frequency value (fswi) determined in conjunction with each ratio value *(ki)*.

8.  Control system for controlling a DCDC converter having a dual bridge topology comprising two conversion stages, referred to as first conversion stage (20) and second conversion stage (30), each comprising several controlled switches (J1-J8), said two conversion stages being connected together via an inductive circuit, said DCDC converter being controlled by said system to convert a first direct current voltage (Vin) to a second direct current voltage (Vout) by implementing a main control loop (B1), said system being **characterised in that** it includes:

- a first module (M_PH) for determining an optimum phase shift angle ($\phi'$) between a first alternating current voltage and a second alternating current voltage present on either side of the inductive circuit, said optimum phase shift angle corresponding to an optimum functioning point for which the current ($i_{AC}$) that passes through the inductive circuit is in phase with the first alternating current voltage (V1) or the second alternating current voltage (V2) and has a minimum phase shift respectively with the second alternating current voltage (V2) or the first alternating current voltage (V1),
- a second module for determining a switching frequency or acting on a switching frequency to be applied to the switches, so as to make a current phase shift angle ($\phi$) corresponding to the phase shift between the first alternating current voltage (V1) and the second alternating current voltage (V2) and coming from the main control loop correspond to the optimum phase shift angle ($\phi'$).

9. System according to Claim 8, **characterised in that** it includes a module for determining a ratio (k) from said first voltage and from said second voltage.

10. System according to Claim 9, **characterised in that** the optimum phase shift angle is determined from relations:

$$\begin{cases} \phi' = \cos^{-1}(k) & \text{if } k < 1 \\ \phi' = \cos^{-1}\left(\dfrac{1}{k}\right) & \text{if } k > 1 \end{cases}$$

wherein:

- $\phi'$ corresponds to the optimum phase shift angle,
- $k$ corresponds to said ratio.

11. System according to one of Claims 8 to 10, **characterised in that** it includes a module (M_COMP) for comparing said optimum phase shift angle ($\phi'$) with the current phase shift angle ($\phi$) coming from the main control loop.

12. System according to Claim 11, **characterised in that** the comparison module is arranged for determining an increase or reduction signal (S_VAR_fsw1, S_VAR_fsw2) of the switching frequency depending on the result of the comparison between said optimum phase shift angle ($\phi'$) and the current phase shift angle ($\phi$) coming from the main control loop (B1).

13. System according to one of Claims 8 to 10, **characterised in that** it includes a module for determining the difference between said optimum phase shift angle and the current phase shift angle coming from the main loop for controlling and determining (PI) a frequency correction (Dfsw) to be applied to said switching frequency (fsw) so as to make the current phase shift angle converge towards the optimum phase shift angle according to said difference.

14. System according to Claim 9 or 10, **characterised in that** the third module is arranged for memorising in a table, for different power values to be transmitted (Pdc V), each switching frequency value (fswi) determined in conjunction with each ratio value *(ki)*.

15. Computer programme comprising instructions that lead the system according to Claim 8 to execute the steps of the method according to Claims 1 to 7.

16. Storage medium readable by a computer including the computer programme defined in Claim 15.

**Fig. 1**

**Fig. 2**

Fig. 3

Fig. 4

**Fig. 5A**

**Fig. 5B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013164249 A1
- US 2015021998 A1
- US 2008212340 A1
- US 8587975 B2

**Littérature non-brevet citée dans la description**

- **CORRADINI L et al.** Minimum Current Opération of Bidirectional Dual-Bridge Series Resonant DC/DC Converters. *IEEE TRANSACTIONS ON POWER ELECTRONICS, INSTITUTE OF ELECTRICAL AND ELECTRONICS ENGINEERS,* 01 Juillet 2012, vol. 27 (7), 3266-3276

- **MUHAMMAD MUNEEB UR REHMAN ; ROHAIL HASSAN ; NAUMAN ZAFFAR.** High Efficiency modified Dual-Active Bridge DC-DC Converter for Photovoltaic Integration. Department of Electrical Engineering